(19) Europäisches Patentamt
European Patent Office
Office européen des brevets

(11) Publication number: **0 386 564 B1**

(12) **EUROPEAN PATENT SPECIFICATION**

(45) Date of publication of patent specification: **03.11.93**

(51) Int. Cl.5: **C08G 18/48**, C08G 18/50, C08G 18/66, C08G 18/32, //(C08G18/48,101:00)

(21) Application number: **90103643.4**

(22) Date of filing: **25.02.90**

(54) **Preparation of flexible polyurethane foams.**

(30) Priority: **09.03.89 US 321258**

(43) Date of publication of application:
**12.09.90 Bulletin 90/37**

(45) Publication of the grant of the patent:
**03.11.93 Bulletin 93/44**

(84) Designated Contracting States:
**AT BE CH DE DK ES FR GB IT LI SE**

(56) References cited:
**EP-A- 0 249 860**
**GB-A- 1 203 424**
**US-A- 4 518 720**
**US-A- 4 664 563**
**US-A- 4 876 292**

(73) Proprietor: **MILES INC.**
**One Mellon Center**
**500 Grant Str.**
**Pittsburgh, PA 15219-2502(US)**

(72) Inventor: **Milliren, Charles M.**
**100 Marshall Drive**
**Coraopolis, PA 15108(US)**
Inventor: **Gricar, James R.**
**181 Deer Drive**
**Washington, PA 15301(US)**

(74) Representative: **Müller, Gerhard, Dr. et al**
**BAYER AG**
**Konzernverwaltung RP**
**Patente Konzern**
**D-51368 Leverkusen (DE)**

**Description**

BACKGROUND OF THE INVENTION

It is known in the art to manufacture flexible polyurethane foams using toluene diisocyanate ("TDI") and prepolymers based on toluene diisocyanate (see, e.g., "POLYURETHANES: CHEMISTRY AND TECHNOLOGY", Part II, Saunders and Frisch, 1964, pages 1-191, and U.S. Patent 4,569,952).

It is also known to use various low molecular weight crosslinkers in the manufacture of flexible foams. U.S. Patent 3,067,148 describes the use of tetrahydric compounds derived from ethylene diamine and alkylene oxides. U.S. Patent 3,948,825 describes the use of reaction products of methylene dianiline and alkylene oxides. U.S. Patent 4,569,952 describes the use of an addition product of an alkylene oxide and an aromatic diamine and a mixture of the addition product with an alkanolamine. The '952 patent also describes the conventional use of diethanolamine as a crosslinker in flexible, TDI-based foams.

GB-A-1203424 discloses a process for the production of flexible foam in which process the following components are mixed:

2,2,4-trimethylhexametylenediamine, a polyether polyol with a molecular weight of about 6000, toluene diisocyanate, a blowing agent $CCl_3F$.

Dupont has recently introduced an amine sold as Dytek A amine for a variety of uses. The Dytek A amine is described as 2-methylpentamethylene-diamine. Among the uses suggested in the product bulletin entitled "Amines" is the use as a chain extender for polyurethanes.

While many foam formulations based on TDI and prepolymers thereof give adequate properties for many applications, it is generally difficult to have good processability and moldability over a broad isocyanate index range. Additionally, it would be desirable to develop a foam having high tear strength, high elongation, high tensile strength and low compression set for automotive seating and headrests and for nonautomotive seating. In addition, in the past it has been very difficult to produce a foam meeting all of the requirements of the Fisher Body Material Specification 7-7. This particular specification requires (i) a minimum tensile strength of 82 kPa, (ii) a minimum tear strength for seat cushions of 240 N/m and for seat backs of 210 N/m, (iii) a minimum breaking elongation of 140% for seat cushions and 125% for seat backs, and (iv) a maximum compression set (50% deflection) of 20% for seat cushions and 20% for seat backs.

DESCRIPTION OF THE INVENTION

The present invention is directed to a process for producing flexible polyurethane foams and to the foams so-produced. The reactive mixtures used give good processability and moldability over a broad isocyanate index range. Foams of a wide range of densities can also be produced over a wide isocyanate index range. The foams produced have high tear strengths, high elongations, high tensile strengths and low compression sets. In addition, many of the preferred formulations meet all of the requirements of the above-noted Fisher Body specification.

More particularly, the flexible foams of the present invention are prepared by reacting:

A) from more than 0 up to 3 parts by weight per 100 parts by weight of components B) and C) of an amine of the formula:

$$H_2N - R - NH_2$$

where R is a $C_3$ to $C_{10}$ straight or branched alkylene group or a $C_4$ to $C_{15}$ alicyclic group,

B) from 1 to 30% by weight of a polyoxyalkylene polyamine having a molecular weight of from 400 to 5000 and containing from 2 to 3 primary amino groups,

C) from 70 to 99% by weight of one or more polyether polyhydroxyl compounds having hydroxyl functionalities of from 2 to 3 and molecular weights of from 1000 to 10,000, the percents by weight of component B) and component C) totalling 100%, and being based on the total weight of components B) and C), and

D) an isocyanate selected from the group consisting of toluene diisocyanate and prepolymers of toluene diisocyanate, preferably prepared by reacting toluene diisocyanate and polyether polyhydroxyl compounds having 2 to 3 hydroxyl groups and molecular weights of form 1000 to 10,000, said isocyanate having an isocyanate group content of from about 15% to about 48% by weight, in the presence of

E) a blowing agent, at an isocyanate index of from 60 to 140.

Component A) is preferably used in an amount of from 0.05 to 2.5 parts by weight and most preferably in an amount of from 0.25 to 1.5 parts by weight. Component B) is preferably used in an amount of from 1

2

to 20% by weight and most preferably from 2.5 to 15% by weight, with component C) preferably used in an amount of from 80 to 99% by weight and most preferably from 85 to 97.5% by weight. The preferred and most preferred ranges produce foams of the best overall physical properties. The isocyanates and prepolymers useful herein are well known in the art and are described, for example in the Saunders and Frisch book referred to earlier. In general the isocyanate index is from 60 to 140, and is preferably from 90 to 120.

Component A) of the reaction mixture of the present invention is an amine of the formula:

$$H_2N -R- NH_2$$

where R is a $C_3$ to $C_{10}$ straight or branched chain alkylene group or a $C_4$ to $C_{15}$ alicyclic group. Useful diamines include the various straight and branched chain isomers of diaminopropane, diaminobutane, diaminopentane, diaminohexane, diaminoheptane, diaminooctane, diaminononane, and diaminodecane. It is preferred that R represent a branched chain alkylene group. Specific useful diamines include 1,2- and 1,3-diaminopropane; 1,3-, 2,3-, and 1,4-diaminobutane; 1,2-diamino-2-methyl-propane; 1,5-diaminopentane; 1,4-diamino-1-methylbutane; 1,4-diamino-2-methylbutane; 1,3-diamino-1-ethylpropane; 1,3-diamino-1,1-dimethylpropane; 1,3-diamino-1,2-dimethylpropane; 1,3-diamino-2,2-dimethylpropane; 1,5-diamino-2-methylpentane; 1,6-diaminohexane and the like. Useful alicyclic diamines include the various isomers of diaminocyclobutane, diaminocyclopentane, diaminocyclohexane, diaminocycloheptane, diaminocyclooctane, and diaminocyclononane. Also useful are the diamino-1-methylcyclohexanes; the methylene-bis-(cyclohexylamines); the diamino-1-methylcyclo pentanes; the diaminodimethylcyclohexanes; isophorone diamine; and the like. It is presently preferred to use those diamines where R is a branched chain alkylene group. The most preferred material is 1,5-diamino-2-methylpentane.

Component B) of the reaction mixture is a polyoxyalkylene polyamine having a molecular weight of from about 400 to about 5000, and having from 2 to 3 primary amine groups. Such polyamines are known in the art. One method for preparing such amines is the amination of polyhydroxy polyethers (e.g.,polypropylene glycols) by a reaction with ammonia in the presence of Raney nickel and hydrogen (Belgian Patent 634,741). U.S. 3,654,370 discloses the preparation of polyoxyalkylene polyamines by reaction of the corresponding polyol with ammonia and hydrogen in the presence of a nickel, copper, or chromium catalyst. The preparation of polyethers containing amino end groups by the hydrogenation of cyanoethylated polyoxypropylene ethers is described in German Patent 1,193,671. Other methods for the preparation of polyoxyalkylene polyamlnes are described in U.S. Patents 3,155,728 and 3,236,895 and French Patent 1,551,605. Commercially available polyether polyamlnes are sold by Texaco under the Jeffamine tradename.

Component C) comprises one or more polyether polyhydroxyl compounds having hydroxyl functionalities of from 2 to 3, and having molecular weights of from about 1000 to about 10,000, and preferably from about 2000 to about 6000. Such polyethers are generally known in the art. These polyethers may be obtained by polymerizing epoxides, such as ethylene oxide, propylene oxide, butylene oxide, tetrahydrofuran, styrene oxide or epichlorohydrin in the presence of Lewis catalysts such as $BF_3$. Polymerization may also be accomplished by the addition of epoxides (preferably ethylene and/or propylene oxide) either in admixture or successively, to compounds containing reactive hydrogen atoms such as water or alcohols. Examples of suitable reactive compounds include ethylene glycol, 1,3- and 1,2-propylene glycol, trimethylol propane, glycerol and the like. Also useful are the polyethers containing high molecular weight polyadducts and polycondensates or polymers in finely dispersed or dissolved form. Such polyethers may be obtained by polyaddition reactions (for example, reactions between polyisocyanates and aminofunctional compounds) and polycondensation reactions (for example, between formaldehyde and phenols and/or amines) in situ in the above described polyethers. Such processes are described in German Auslegeschriften 1,168,075 and 1,260,142 and in German Offenlegungsschriften 2,324,134, 2,423,984, 2,512,385, 2,513,815, 2,550,796, 2,550,797, 2,550,833, 2,550,862, 2,633,293, and 2,639,254. See also U.S. Patents 3,325,421, 4,042,537, 4,089,835, 4,293,470, 4,296,213, and 4,374,209. Also useful are the so-called polymer polyols obtained by polymerizing one or more ethylenically unsaturated monomers in a polyether. Such polymer polyols are described in U.S. 3,383,351, 3,304,273, 3,523,093, 3,110,685 and RE 28,715 and 29,118. Polymer polyols are commercially available from Bayer AG, BASF, and Union Carbide. Regardless of the specific polyether used herein, it is generally preferred to use polyethers containing primary hydroxyl groups.

The isocyanate used is selected from the group consisting of toluene diisocyanate and prepolymers of toluene diisocyanate, with the isocyanate group content of the isocyanate ranging from about 15 to about 48 % by weight (48% represents the isocyanate group content of toluene diisocyanate). In the case of prepolymers, as is known in the art, such prepolymers are generally prepared by reacting toluene diisocyanate with a polyether polyhydroxyl compound having from 2 to 3 hydroxyl groups and a molecular weight of from about 1000 to about 10,000. It is preferred to use toluene diisocyanate as the isocyanate.

According to the invention, water and/or readily volatile organic substances are used as blowing agents. Suitable organic blowing agents include, for example, acetone, ethyl acetate and halogen substituted alkanes such as methylene chloride, chloroform, ethylidene chloride, vinylidene chloride, monofluorotrichloromethane, chlorodifluoromethane, and dichlorodifluoromethane as well as butane, hexane, heptane and diethyl ether. The effect of a blowing agent can also be obtained by the addition of compounds which decompose at temperatures above room temperature to release gases such as nitrogen, e.g., azo compounds such as azoisobutyric acid nitrile. Further examples of blowing agents and the use of blowing agents are known and have been described, e.g., in Kunststoff-Handbuch, Volume VII, published by Vieweg and Hochtlen, Carl-Hanser-Verlag, Munich 1966, e.g., on pages 108 and 109, 432 to 455 and 507 to 510.

Catalysts are also frequently used according to the invention. The catalysts added are generally known and include tertiary amines such as triethylamine, tributylamine, N-methylmorpholine, N-ethylmorpholine, N-cocomorpholine, N,N,N′,N″tetramethylethylene diamine, 1,4-diazabicyclo-(2,2,2)-octane, N-methyl-N′-dimethyl-aminoethylpiperazine, N,N-dimethylbenzylamine, bis(N,N-diethylaminoethyl) adipate, N,N-diethylbenzyl amine, pentamethyl-diethylenetriamine, N,N-dimethyl cyclohexylamine, N,N,N′,N′tetramethyl 1,3-butanediamine, N,N-dimethyl-beta-phenylethylamine′, 1,2-dimethylimidazole, 2-methylimidazole and the like. Also useful are the commercially available tertiary amines such as Niax Al and Niax A107, available from Union Carbide; Thancat DD, available from Texaco; and the like. Mannich bases known per se obtained from secondary amines such as dimethylamine and aldehydes, preferably formaldehyde, or ketones such as acetone, methyl ethyl ketone or cyclohexanone and phenols such as phenol nonylphenol or bisphenol may also be used as catalysts. Examples of catalysts which consist of tertiary amines having hydrogen atoms which are reactive with isocyanate groups include triethanolamine, triisopropanolamine, N-methyl-diethanolamine, N-ethyl-diethanolamine, N,N-dimethyl-ethanolamine and their reaction products with alkylene oxides such as propylene oxide and/or ethylene oxide.

Silaamines having carbon-silicon bonds as described, e.g., in German Patent No. 1,229,290 and U.S. Patent No. 3,620,984 may also be used as catalysts. Examples include 2,2,4-trimethyl-2-silamorpholine and 1,3-diethylaminoethyltetramethyldisiloxane.

Basic nitrogen compounds such as tetraalkylammonium hydroxides, alkali metal hydroxides such as sodium phenolate and alkali metal alcoholates such as sodium methylate may also be used as catalysts. Hexahydrotriazines are also suitable catalysts.

Organic metal compounds may also be used as catalysts according to the invention, in particular organic tin compounds. The organic tin compounds used are preferably tin(II) salts of carboxylic acids such as tin(II) acetate, tin(II) octoate, tin(II) ethyl hexoate and tin(II) laurate and tin(IV) compounds such as dibutyl tin oxide, dibutyl tin dichloride, dibutyl tin diacetate, dibutyl tin dilaurate, dibutyl tin maleate or dioctyl tin diacetate. All the above-mentioned catalysts may, of course, be used as mixtures.

Further examples of catalysts which may be used according to the invention and details concerning the activity of the catalysts are known and are described, e.g., in Kunststoff-Handbuch, Volume VII, published by Vieweg and Hochtlen, Carl-Hanser-Verlag, Munich 1966, pages 96 to 102.

The catalysts, when used, are generally used in a quantity of between about 0.001 and 10%, by weight, based on the quantity of hydroxyl group containing polyethers.

Surface active additives such as emulsifiers and foam stabilizers may also be used according to the invention. Suitable emulsifiers include, e.g., the sodium salts of ricinoleic sulphonates or salts of fatty acids with amines such as oleic acid diethylamine or stearic acid diethanolamine. Alkali metal or ammonium salts of sulphonic acids such as dodecylbenzene sulphonic acid or dinaphthylmethane disulphonic acid or of fatty acids such as ricinoleic acid or of polymeric fatty acids may also be used as surface active additives.

Polyether siloxanes are particularly suitable foam stabilizers, especially useful are those which are water soluble. These compounds generally have a polydimethyl siloxane group attached to a copolymer of ethylene oxide and propylene oxide. Foam stabilizers of this kind are known and have been described, for example, in U.S. Patent Nos. 2,834,748, 2,917,480 and 3,629,308. It may, however, be advantageous to carry out the process according to the invention without foam stabilizers.

Other additives which may also be used according to the invention include reaction retarders, e.g., substances which are acid in reaction such as hydrochloric acid or organic acid halides, cell regulators such as paraffins or fatty alcohols or dimethyl polysiloxanes, pigments, dyes, flame retarding agents such as tris-chloroethyl phosphate, tricresyl phosphate or ammonium phosphate and polyphosphates, stabilizers against ageing and weathering, plasticizers, fungistatic and bacteriostatic substances, and fillers such as barium sulphate, kieselguhr, carbon black or whiting.

Other examples of surface active additives, foam stabilizers, cell regulators, reaction retarders, stabilizers, flame retarding substances, plasticizers, dyes, fillers, and fungistatic and bacteriostatic substances which may be used according to the invention and details concerning the use and mode of these additives are known and may be found, e.g., in Kunststoff-Handbuch, Volume VII, published by Vieweg and Hochtlen, Carl-Hanser-Verlag, Munich 1966, on pages 103 to 113.

According to the invention, the components may be reacted together by known processes often using mechanical devices such as those described in U.S. Patent No. 2,764,565. Details concerning processing apparatus which may be used according to the invention may be found in Kunststoff-Handbuch, Volume VII, published by Vieweg and Hochtlen, Carl-Hanser-Verlag, Munich, 1966, pages 121 and 205.

According to the invention, the foaming reaction for producing foam products is often carried out inside molds. In this process, the foamable reaction mixture is introduced into a mold which may be made of a metal such as aluminum or a plastics material such as an epoxide resin. The reaction mixture foams up inside the mold to produce the shaped product. The process of foaming in molds is carried out to produce a product having a cellular structure on its surface. According to the invention, the desired result can be obtained by introducing just sufficient foamable reaction mixture to fill the mold with foam after the reaction is completed.

So-called external mold release agents known in the art, such as silicone waxes and oils, are frequently used when foaming is carried out inside the molds. The process may also be carried out with the aid of so-called internal mold release agents, if desired, in combination with external mold release agents, e.g., described in German Offenlegungsschriften Nos. 2,121,670 and 2,307,589.

Cold setting foams may also be produced, as described in British Patent No. 1,162,517 and German Offenlegungsschrift No. 2,153,086.

Foams may, of course, also be produced by the process of block foaming or by the laminator process known in the art. The products obtainable according to the invention may be used, for example, as upholstery or padding materials.

The invention is further illustrated but is not intended to be limited by the following examples in which all parts and percentages are by weight unless otherwise specified.

EXAMPLES

In the examples which follow, the following materials were used:

A) POLYOL A: a glycerin initiated-propylene oxide/ethylene oxide polyether (weight ratio of PO to EO of about 5:1) having a molecular weight of about 4800, and containing about 88% primary hydroxyl groups.

B) POLYOL B: a dispersion having an OH number of about 28 and consisting of a polyhydrazodicarbonamide in a polyether, and prepared by reacting toluene diisocyanate and hydrazine hydrate in the presence of POLYOL A, according to U.S. Patent 4,042,537. The dispersion has a solids content of 20% by weight.

C) POLYAMINE A: Jeffamine D2000, a 2000 molecular weight polypropylene oxide diamine, available from Texaco.

D) DYTEK A: 2-methylpentamethylenediamine, available from Dupont.

E) DEOA-LF: an 85% solution of diethanolamine in water.

F) 33LV: triethylene diamine (33%) in dipropylene glycol.

G) A-107: Niax A-107, a commercially available tertiary amine from Union Carbide.

H) A-4: Niax A-4, a commercially available tertiary amine from Union Carbide.

I) DC-5243: a polysiloxane, commercially available from Dow Corning.

J) UL-1: an organotin catalyst, commercially available from Fomrez.

K) WATER

L) ISOCYANATE: an 80/20 mixture of 2,4- and 2,6-toluene diisocyanate.

In the examples, the components of the B-side were accurately weighed into a suitable container and mixed using an air driven two blade mixer. The resultant mixture was then taken to the metering equipment. The metering equipment was flushed with the mixture and calibrated for the desired foam index.

The mixture was mixed with ISOCYANATE using high pressure metering equipment (HENNECKE HK165) and a Hennecke MQ-18-4 self-cleaning mixhead. Process settings were as follows:

| TEMPERATURE MIX/ISO: | 26,7 ° C(80 ° F)/26,7 ° C(80 ° F) |
|---|---|
| MIX PRESSURES MIX/ISO | 170,1 atm (2500 psi)/108,9 atm (1600 psi) |
| MOLD TEMP ° F | 54,4 ° C (130 ° F) - 65,6 ° C (150 ° F) |
| MOLD RELEASE | Park 798 |
| DEMOLD TIME | 3-5 minutes |

The reaction mixture was metered into a 38,1 cm (15 inch) x 38,1 (15 inch) x 10,2 cm (4 inch) mold (which had been previously sprayed with the mold release), in an amount sufficient to give the desired foam density. The mold was then closed and the foam part demolded after the reaction was complete. The parts were weighed, labelled and tested for density (ASTM D3574), ILD 25R and 50R (ASTM D3574), tensile strength (ASTM D3574), tear strength (ASTM D3574), and elongation at break (ASTM D3574). The parts were then tested under ASTM D2406 laboratory procedures as specified in Chrysler MS-DC634.

The B-side formulations used are reported in Table 1, while the results obtained were as reported in Tables 2 through 5.

## TABLE 1

| B-SIDE | A* | B | C* | D | E | F |
|---|---|---|---|---|---|---|
| POLYOL A, pbw | 50 | 45 | 20 | 10 | 45 | 45 |
| POLYOL B, pbw | 50 | 45 | 80 | 80 | 45 | 45 |
| POLYAMINE, pbw | - | 10 | - | 10 | 10 | 10 |
| DYTEK, pbw | - | 1.0 | - | 1.0 | 1.0 | 1.5 |
| WATER, pbw | 3.8 | 3.8 | 3.5 | 3.5 | 3.5 | 3.5 |
| DEOA-LF, pbw | 2.35 | - | 2.35 | - | - | - |
| 33 LV, pbw | 0.35 | 0.95 | 0.6 | 1.1 | 1.1 | 0.85 |
| A-107, pbw | 0.33 | - | 0.4 | - | - | - |
| A-4, pbw | 0.48 | - | - | - | - | - |
| DC-5243, pbw | 2.0 | 2.0 | 2.0 | 2.0 | 1.8 | 1.8 |
| UL-1, pbw | - | - | 0.005 | - | - | - |

EP 0 386 564 B1

## TABLE 2 - 90 INDEX

| Results/Example | 1* | 2* | 3 | 4 | 5* | 6 | 7 | 8 |
|---|---|---|---|---|---|---|---|---|
| B-SIDE | A | A | B | B | C | D | E | F |
| PART WEIGHT, gms. | 498 | 592 | 507 | 587 | 562 | 560 | 571 | 568 |
| DENSITY, kg/m$^3$ | 30,27 | 32,52 | 28,83 | 30,59 | 32,68 | 31,88 | 32,52 | 31,4 |
| " pcf. | 1.89 | 2.03 | 1.8 | 1.91 | 2.04 | 1.99 | 2.03 | 1.96 |
| ILD 25% R, N/323cm$^2$ | 74 | 108 | 104 | 132 | 108 | 124 | 110 | 98 |
| ILD 50% R, N/323cm$^2$ | 147 | 200 | 195 | 233 | 206 | 236 | 204 | 203 |
| TENSILE STR., kPa. | 129 | 158 | 178 | 186 | 148 | 161 | 206 | 196 |
| TEAR STR., N/m | 215 | 236 | 358 | 425 | 236 | 394 | 464 | 429 |
| ELONGATION, % | 124 | 136 | 179 | 168 | 116 | 147 | 211 | 206 |
| 50% C.S. 2A, (Cd)% | 13.8 | 13.8 | 20.6 | 17.0 | 12.4 | 20.8 | 29.6 | 13.0 |

EP 0 386 564 B1

EP 0 386 564 B1

TABLE 3 – 100 INDEX

| Results Example | 9* | 10* | 11 | 12 | 13* | 14* | 15 | 16 | 17 |
|---|---|---|---|---|---|---|---|---|---|
| B-SIDE | A | A | B | B | C | C | D | E | F |
| PART WEIGHT, gms. | 501 | 590 | 505 | 585 | 557 | 618 | 561 | 566 | 561 |
| DENSITY, kg/m³ | 28,83 | 33,64 | 27,55 | 32,04 | 31,72 | 34,44 | 31,08 | 31,4 | 30,44 |
| " pcf | 1.8 | 2.1 | 1.72 | 2.0 | 1.98 | 2.15 | 1.94 | 1.96 | 1.9 |
| ILD 25% R, N/323cm² | 89 | 127 | 106 | 142 | 129 | 154 | 146 | 118 | 112 |
| ILD 50% R, N/323cm² | 177 | 234 | 195 | 258 | 239 | 278 | 265 | 221 | 206 |
| TENSILE STR., kPa. | 140 | 166 | 163 | 198 | 157 | 182 | 162 | 180 | 179 |
| TEAR STR., N/m | 193 | 224 | 312 | 359 | 219 | 242 | 329 | 347 | 329 |
| ELONGATION, % | 112 | 118 | 152 | 173 | 110 | 117 | 120 | 158 | 172 |
| 50% C.S. 2A, (Cd)% | 11.6 | 11.8 | 17.0 | 17.0 | 11.0 | 11.0 | 15.8 | 18.8 | 15.4 |

TABLE 4 - 110 INDEX

| Results \ Example | 18* | 19* | 20 | 21 | 22* | 23 | 24 | 25 |
|---|---|---|---|---|---|---|---|---|
| B-SIDE | A | A | B | B | C | D | E | F |
| PART WEIGHT, gms. | 501 | 591 | 509 | 581 | 619 | 565 | 564 | 558 |
| DENSITY, kg/m³ | 28,99 | 33,8 | 27,87 | 30,76 | 35,08 | 31,4 | 31,08 | 31,24 |
| " pcf. | 1.81 | 2.11 | 1.74 | 1.92 | ,2.19 | 1.96 | 1.94 | 1.95 |
| ILD 25% R, N/323cm² | 119 | 167 | 131 | 165 | 192 | 178 | 138 | 122 |
| ILD 50% R, N/323cm² | 222 | 301 | 242 | 298 | 346 | 318 | 246 | 217 |
| TENSILE STR., kPa. | 147 | 177 | 153 | 166 | 174 | 177 | 178 | 189 |
| TEAR STR., N/m | 207 | 207 | 268 | 263 | 219 | 271 | 277 | 271 |
| ELONGATION, % | 102 | 104 | 125 | 122 | 99 | 112 | 134 | 131 |
| 50% C.S. 2A, (Cd)% | 9.8 | 9.8 | 13.6 | 11.0 | 9.4 | 11.8 | 14.4 | 13.0 |

EP 0 386 564 B1

TABLE 5 - 120 INDEX

| Results \ Example | 26* | 27* | 28 | 29 | 30* | 31 | 32 | 33 |
|---|---|---|---|---|---|---|---|---|
| B-SIDE | A | A | B | B | C | D | E | F |
| PART WEIGHT, gms. | 514 | 596 | 502 | 571 | 619 | 562 | 554 | 555 |
| DENSITY, kg/m³ | 30,11 | 33 | 27,23 | 31,56 | 35,56 | 31,56 | 29,95 | 29,63 |
| " pcf | 1.88 | 2.06 | 1.70 | 1.97 | 2.22 | 1.97 | 1.87 | 1.85 |
| ILD 25% R, N/323cm² | 126 | 200 | 138 | 179 | 225 | 183 | 150 | 152 |
| ILD 50% R, N/323cm² | 241 | 365 | 251 | 320 | 411 | 331 | 273 | 267 |
| TENSILE STR., kPa. | 146 | 166 | 152 | 158 | 178 | 166 | 144 | 160 |
| TEAR STR., N/m | 175 | 184 | 224 | 245 | 207 | 250 | 228 | 215 |
| ELONGATION, % | 87 | 86 | 109 | 105 | 87 | 95 | 102 | 101 |
| 50% C.S. 2A, (Cd)% | 13.4 | 8.4 | 11.0 | 10.0 | 9.6 | 13.2 | 11.0 | 10.4 |

* Denotes Comparison Examples

Examples 1, 2, 5, 9, 10, 13, 14, 18, 19, 22, 26, 28 and 30 were comparative examples. All the other examples had excellent processing characteristics. As far as the compression set data, in general values of less than 20% are desirable, with the lower the %, the better the value.

11

## Claims

1. A process for preparing a flexible foam comprising reacting:
   A) from more than 0 to up to 3 parts by weight per 100 parts by weight of components B) and C) of an amine of the formula:

   $H_2N - R - NH_2$

   where R is a C3 to C10 straight or branched alkylene group, or a C4 to C15 alicyclic group,
   B) from 1 to 30% by weight of a polyoxyalkylene polyamine having a molecular weight of from 400 to 5000 and containing from 2 to 3 primary amino groups,
   C) from 70 to 99% by weight of one or more polyether polyhydroxyl compounds having hydroxyl functionalities of from 2 to 3 and molecular weights of from 1000 to 10,000, the percents by weight of components B) and C) totalling 100%, and being based on the combined weight, of components B) and C), and
   D) an isocyanate selected from the group consisting of toluene diisocyanate and prepolymers of toluene diisocyanate, said isocyanate having an isocyanate group content of from 15 to 48% by weight, in the presence of
   E) a blowing agent, at an isocyanate index of from 60 to 140.

2. The process of Claim 1, wherein R is a $C_4$ to $C_{10}$ branched chain alkylene group.

3. The process of Claim 2, wherein component A) is 1,5-diamino-2-methylpentane.

4. The process of Claim 1, wherein component A) is present in an amount of from 0.05 to 2.5 parts by weight.

5. The process of Claim 4 wherein component A) is present in an amount of from 0.25 to 1.5 parts by weight.

6. The process of Claim 4 wherein component B) is present in an amount of from 1 to 20% by weight, and component C) in an amount of from 99 to 80% by weight.

7. The process of Claim 6 wherein component B) is present in an amount of from 2.5 to 15% by weight, and component C) in an amount of from 97.5 to 85 % by weight.

8. The process of Claim 1, wherein said index is from 90 to 120.

9. The flexible polyurethane foam produced according to the process of Claim 1.

10. The flexible polyurethane foam produced according to the process of Claim 3.

## Patentansprüche

1. Verfahren zur Herstellung eines flexiblen Schaums umfassend das Reagierenlassen:
   A) von mehr als 0 bis zu 3 Gewichtsteilen pro 100 Gewichtsteile der Bestandteile B) und C) eines Amins der Formel:

   $H_2N - R - NH_2$

   worin
   R eine $C_3$ bis $C_{10}$ gerade oder verzweigte Alkylengruppe oder eine $C_4$ bis $C_{15}$ alicyclische Gruppe ist,
   B) von 1 bis 30 Gew.-% eines Polyoxyalkylen-Polyamins, das ein Molekulargewicht von 400 bis 5000 hat und das 2 bis 3 primäre Aminogruppen enthält,
   C) von 70 bis 99 Gew.-% von einer oder mehreren Polyether-Polyhydroxylverbindungen, die 2 bis 3 Hydroxylfunktionalitäten und Molekulargewichte von 1000 bis 10 000 aufweisen, wobei die Gewichtsprozente der Bestandteile B) und C) insgesamt 100% ausmachen und auf den kombinierten Gewichten der Verbindungen B) und C) basieren und

D) eines Isocyanats, das aus der Gruppe, die aus Toluoldiisocyanat und Präpolymeren aus Toluoldiisocyanat besteht, wobei das Isocyanat einen Isocyanatgruppengehalt von 15 bis 48 Gew.-% hat, ausgewählt ist, in Gegenwart eines

E) Treibmittels, bei einem Isocyanat-Index von 60 bis 140.

2. Verfahren nach Anspruch 1, worin R eine $C_4$ bis $C_{10}$ verzweigtkettige Alkylengruppe ist.

3. Verfahren nach Anspruch 2, worin Bestandteil A) 1,5-Diamino-2-methylpentan ist.

4. Verfahren nach Anspruch 1, worin Bestandteil A) in einer Menge von 0,05 bis 2,5 Gewichtsteilen vorhanden ist.

5. Verfahren nach Anspruch 4, worin Bestandteil A) in einer Menge von 0,25 bis 1,5 Gewichtsteilen vorhanden ist.

6. Verfahren nach Anspruch 4, worin Bestandteil B) in einer Menge von 2 bis 20 Gew.-% und Bestandteil C) in einer Menge von 99 bis 80 Gew.-% vorhanden ist.

7. Verfahren nach Anspruch 6, worin Bestandteil B) in einer Menge von 2,5 bis 15 Gew.-% und Bestandteil C) in einer Menge von 97,5 bis 85 Gew.-% vorhanden ist.

8. Verfahren nach Anspruch 1, worin der Index von 90 bis 120 reicht.

9. Flexibler Polyurethanschaum, hergestellt nach dem Verfahren von Anspruch 1.

10. Flexibler Polyurethanschaum, hergestellt nach dem Verfahren von Anspruch 3.

**Revendications**

1. Procédé de préparation d'une mousse flexible comprenant la réaction de :

A) plus de 0 jusqu'à 3 parties en poids pour 100 parties en poids de composants B) et C) d'une amine de formule :

$H_2N-R-NH_2$

dans laquelle R représente un groupement alkylène linéaire ou ramifié en $C_3$-$C_{10}$ ou un groupement alicyclique en $C_4$-$C_{15}$,

B) 1 à 30 % en poids d'une polyoxyalkylène polyamine ayant un poids moléculaire de 400 à 5 000 et contenant deux ou trois groupements amino primaires,

c) 70 à 99 % en poids d'un ou plusieurs polyéthers polyhydroxylés contenant deux ou trois fonctions hydroxyle et ayant des poids moléculaires de 1 000 à 10 000, les pourcentages en poids de composant B) et de composant C) représentant au total 100 % et étant pris par rapport au total des poids des composants B) et C), et

D) un isocyanate choisi dans le groupe constitué du toluène diisocyanate et de prépolymères de toluène diisocyanate, ledit isocyanate ayant une teneur en groupement isocyanate comprise entre 15 et 48 % en poids, en présence de

E) un agent gonflant ayant un indice d'isocyanate compris entre 60 et 140.

2. Procédé selon la revendication 1, dans lequel R est un groupement alkylène à chaîne ramifiée en $C_4$-$C_{10}$.

3. Procédé selon la revendication 2, dans lequel le composant A) est le 1,4-diamino-2-méthylpentane.

4. Procédé selon la revendication 1, dans lequel le composant A) est présent en une quantité comprise entre 0,05 et 2,5 parties en poids.

**5.** Procédé selon la revendication 4, dans lequel le composant A) est présent en une quantité comprise entre 0,25 et 1,5 parties en poids.

**6.** Procédé selon la revendication 4, dans lequel le composant B) est présent en une quantité de 1 à 20 % en poids et le composant C) est présent en une quantité comprise entre 99 et 80 % en poids.

**7.** Procédé selon la revendication 6, dans lequel le composant B) est présent en une quantité de 2,5 à 15 % en poids et le composant C) est présent en une quantité comprise entre 97,5 et 85 % en poids.

**8.** Procédé selon la revendication 1, dans lequel ledit indice est compris entre 90 et 120.

**9.** Mousse de polyuréthanne flexible produite selon le procédé de la revendication 1.

**10.** Mousse de polyuréthanne flexible produite selon le procédé de la revendication 3.